# EUROPÄISCHE PATENTSCHRIFT

(11) **EP 3 381 274 B1**
(45) Veröffentlichungstag und Bekanntmachung des Hinweises auf die Patenterteilung: **27.04.2022**
(21) Anmeldenummer: 18164485.7
(22) Anmeldetag: 28.03.2018
(51) Int. Cl.: A01K 15/04

(54) **VIEH-SCHLAGBÜGEL MIT ZWEI BÜGELELEMENTEN**
CATTLE SHACKLE WITH TWO SHACKLE ELEMENTS
ARCEAU DE FRAPPE POUR ANIMAUX D'ÉLEVAGE DOTÉ DE DEUX ÉLÉMENTS ARCEAU

(30) Priorität: 29.03.2017 DE 102017003125
(43) Veröffentlichungstag der Anmeldung: 03.10.2018
(73) Patentinhaber: Strasser, Josef, 84494 Niederbergkirchen (DE)
(72) Erfinder: Strasser, Josef, 84494 Niederbergkirchen (DE)
(74) Vertreter: Rothkopf, Ferdinand

(56) Entgegenhaltungen:
- EP-A1- 1 099 374
- EP-A2- 0 868 846
- KR-B1- 100 701 280
- NL-A- 8 104 218
- RU-C1- 2 613 492
- US-A- 546 999

## Beschreibung

### Hintergrund der Erfindung

Die Erfindung betrifft einen Vieh-Schlagbügel zum Verhindern oder Erschweren eines Ausschlagens von einem Vieh, mit zwei Bügelelementen, die relativ zueinander versetzbar sind und dazu angepasst sind, den Vieh-Schlagbügel an dem Vieh zwischen einer Flanke sowie einem Rückgrat des Viehs zu halten.

Es kommt öfters vor, dass ein Vieh bzw. ein Nutztier, insbesondere eine Kuh, bei einer Behandlung oder beim Melken ruhiggestellt werden muss. Dazu ist es bekannt, einen Vieh-Schlagbügel zu verwenden, der in einem an dem Vieh angebrachten Zustand unter eine Flanke des Viehs eingreift und sich über dessen Rückgrat erstreckt. Mit dem Eingreifen unter der Flanke wird die Flanke in der Regel hochgehoben und/oder nach innen gedrückt, was meistens beruhigend auf das Vieh wirkt. Zudem ist das Vieh in seiner Bewegungsfreiheit eingeschränkt und ein Ausschlagen des Viehs mit dessen Hinterbeinen kann erschwert oder auch verhindert werden. Insbesondere kann damit eine unruhige Kuh beim Melken ruhiggestellt werden. Auch eine Untersuchung oder medizinische Behandlung kann erleichtert werden.

Ein solcher Vieh-Schlagbügel wird entsprechend auch als Schlagfessel oder Hüftfessel bezeichnet und weist herkömmlicherweise zwei Bügelelemente bzw. Halteelemente zum Halten des Vieh-Schlagbügels zwischen der Flanke und dem Rückgrat auf. Dabei sind die beiden Bügelelemente relativ zueinander verschiebbar gestaltet, um den Vieh-Schlagbügel an das jeweilige Vieh in seiner Größe anpassen und dort befestigen zu können. Zum Befestigen weisen beide Bügelelemente in der Regel jeweils ein bogenförmiges Ende auf, wobei das eine Ende zum Umgreifen der Flanke dient und das andere Ende über das Rückgrat des Viehs zu legen ist. Vor einem Anbringen des Vieh-Schlagbügels an das Vieh ist ein Abstand der bogenförmigen Enden individuell auf die Größe des Viehs einzustellen. Dazu werden die beiden Bügelelemente von einem Benutzer zunächst voneinander weg verschoben und entsprechend fixiert. Dann wird der Vieh-Schlagbügel am Vieh mittels Umgreifen der Flanke von der Flanke bis über das Rückgrat gelegt. Dabei ist das Rückgrat des Viehs stabil, während die Flanke in gewissem Ausmaß flexibel ist. Derart angebracht, ist der Vieh-Schlagbügel starr und am Vieh klemmend zwischen Rückgrat und Flanke gehalten.

Ein Problem solch herkömmlicher Vieh-Schlagbügel ist, dass sie nicht von jedem unruhigen Vieh akzeptiert werden. Häufig wird das Vieh noch unruhiger und aggressiver und schlägt derart aus, dass der Vieh-Schlagbügel vom Vieh abfällt. Dabei kann es zu Verletzungen des Benutzers kommen. Zudem erfordert der tägliche Arbeitsablauf vor allem beim Melken unerwünscht viel Zeit.

Aus EP 1 099 374 A1 ist eine Vorrichtung bekannt, die Tiere daran hindert, mit den Hinterbeinen auszuschlagen. Die Vorrichtung umfasst zwei gebogene Teile, die in einem Mittelstück verschiebbar angeordnet sind. Ferner ist ein Druckknopf vorgesehen, der zu einer im Inneren eines jeden gebogenen Teils angeordneten Federkonstruktion gehört. Bei eingedrücktem Druckknopf befindet sich die Vorrichtung in einer Schiebeposition. Das jeweilige gebogene Teil kann dann in dem Mittelstück verschoben werden, bis der Druckknopf mittels der Federkonstruktion wieder in eine Aussparung einer in dem Mittelstück sich befindenden Rille einrastet. Damit ist die Vorrichtung auf die gewünschte Abmessung fixiert.

Aus US 546 999 A1 ist zum Verhindern eines Ausschlagens einer Kuh eine Hebelkonstruktion bekannt, bei der ein erster Hebel schwenkbar mit einer gebogenen Stange verbunden ist, die schwenkbar mit einem zweiten Hebel verbunden ist. Zwischen dem ersten Hebel und der Stange ist ein aus Federstahl gestalteter Streifen angebracht. Der Streifen ist dazu angepasst, dass die beteiligen Bauteile zum Anbringen an eine Kuh voneinander auseinandergezogen werden können und dass damit zugleich eine konstante Spannung auf den ersten Hebel und die Stange ausgeübt werden kann.

Aus NL 8 104 218 A ist eine U-förmige Klammer mit zwei L-förmigen Teilen bekannt, die jeweils an ihrem oberen Ende schwenkbar zueinander angeordnet sind. An ihrem unteren Ende sind die Teile mittels einer Kette verbunden, die dazu dient, eine Kuh zwischen den beiden Teilen einzuspannen.

Aus RU 2 613 492 C1 ist eine U-förmige Klemmvorrichtung mit zwei gebogenen Teilen bekannt, die an ihrem oberen Ende jeweils mittels zweier ineinandergreifender Zahnräder schwenkbar zueinander angeordnet sind. Die beiden Zahnräder sind mit einem speziellen Fixiermechanismus relativ zueinander automatisch derart zu fixieren, dass ein Bewegen der beiden Teile aufgrund einer Bewegung des Viehs nicht möglich ist.

Aus KR 100 701 280 B1 ist eine Schutzvorrichtung zum Schutz vor einem Ausschlagen eines großen Tieres bekannt. Die Schutzvorrichtung umfasst ein Führungselement, in dem eine Feder angeordnet ist. An ihrem Ende ist die Feder mit einem bogenförmigen Zugelement verbunden, das dazu dient, die Flanke eines Tieres zu umgreifen und anzuheben. Dazu ist das Zugelement mit einer in dem Führungselement angeordneten Zugschnur verbunden. Durch Ziehen an der Zugschnur ist das Zugelement nach oben zu heben und in dieser Position mittels Arretieren eines mit der Zugschnur gekoppelten Schiebers zu fixieren. In der fixierten Position ist die Feder nicht beweglich, sondern mittels der Zugschnur fest gespannt. Nach erfolgter Arbeit am Tier wird der Schieber von einem Benutzer gelöst und die Feder drückt dann das Zugelement nach unten.

Aus EP 0 868 846 A2 ist ein C-förmiger Vieh-Schlagbügel mit zwei zueinander verschiebbaren Flachstäben bekannt. Die Flachstäbe sind im am Vieh gehaltenen Zustand mit einem Zahnrad, einer Zahnstange und einem Griff fixiert. Nur ein Benutzer kann die Position der beiden Flächstäbe relativ zueinander anpassen.

### Zugrundeliegende Aufgabe

Der Erfindung liegt die Aufgabe zugrunde, einen Vieh-Schlagbügel bereitzustellen, der vom Vieh besser akzeptiert wird, sodass ein Abfallen bzw. Abschlagen des Schlagbügels verhindert wird.

### Erfindungsgemäße Lösung

Diese Aufgabe ist erfindungsgemäß mit einem Vieh-Schlagbügel nach Anspruch 1 zum Verhindern oder Erschweren eines Ausschlagens von einem Vieh mit zwei Bügelelementen gelöst, die relativ zueinander versetzbar sind und dazu angepasst sind, den Vieh-Schlagbügel an dem Vieh zwischen einer Flanke sowie einem Rückgrat des Viehs zu halten. Dabei sind, wenn der Vieh-Schlagbügel an dem Vieh gehalten ist, die beiden Bügelelemente aufgrund einer Bewegung des Viehs relativ zu einander verschiebbar gestaltet.

Mit der erfindungsgemäßen Bewegbarkeit der beiden Bügelelemente in einem am Vieh gehaltenen Zustand ist der Vieh-Schlagbügel in seiner Spannweite an die Bewegungen des Viehs anpassbar. Dabei bedeutet die Bewegbarkeit der beiden Bügelelemente relativ zu einander auch, dass die Bügelelemente nicht nur auseinander bzw. voneinander weg sondern auch zueinander bzw. zueinander hin bewegbar sind. Je nach Bewegung des Viehs können sich also insbesondere die Halte- bzw. Klemmflächen der beiden Bügelelemente zueinander oder voneinander weg bewegen. Damit kann vermieden werden, dass mit dem Vieh-Schlagbügel ein für das Vieh als störend empfindender Druck oder Zug ausgeübt wird. Das Vieh selbst bewirkt in Abhängigkeit von seiner Bewegung ein Verschieben der beiden Bügelelemente. Zugleich ist der Vieh-Schlagbügel zwischen der Flanke und dem Rückgrat hinreichend bewegungseinschränkend am Vieh gehalten.

Es hat sich gezeigt, dass eine solche, an jede Bewegung des Viehs sich anpassende Bewegungseinschränkung eine erstaunlich beruhigende Wirkung auf das Vieh hat. Ein Abschlagen des Vieh-Schlagbügels von dem Vieh kann zuverlässig verhindert werden. Ein Ausschlagen des Viehs mit dessen Hinterbeinen kann stark eingeschränkt bzw. erschwert oder sogar verhindert werden. Zusätzlich kann eine besonders beruhigende Atmosphäre auf das Vieh insgesamt geschaffen werden. Damit ist der tägliche Arbeitsablauf nicht gestört und entsprechend beschleunigt. Zudem können ruhige Kühe mehr Milch geben.

In erfindungsgemäß vorteilhafter Weise umfasst dazu mindestens eines der beiden Bügelelemente ein bogenförmiges Endteil. Dabei ist das bogenförmige Endteil des mindestens einen Bügelelements dazu angepasst, die Flanke des Viehs zu umgreifen. Bevorzugt weist das andere Bügelelement ebenfalls ein bogenförmiges Endteil auf, das dazu angepasst ist, am Rückgrat des Viehs einzugreifen oder das Rückgrat des Viehs zu umgreifen. Ferner weist das andere Bügelelement in seiner Längserstreckung bevorzugt einen Knick mit einem Winkel von etwa 140° bis 160° auf. Mit einer solchen bogenförmigen und geknickten Gestaltung der Bügelelemente ist der Vieh-Schlagbügel besonders gut an das Vieh in seiner Ergonomie angepasst und kann damit besonders stabil am Vieh gehalten werden.

Bevorzugt sind die beiden Bügelelemente gegenüberliegend von ihrem bogenförmigen Endteil relativ zueinander insbesondere mittels einer Führungsschiene oder eines Führungsrohres bzw. Teleskoprohres geführt verschiebbar gestaltet. Dabei ist die Führungsschiene besonders bevorzugt bauteilsparend und platzsparend als ein Teil eines Bügelelements gestaltet. Beide Bügelelemente sind damit teleskopartig verschiebbar gestaltet. Die teleskopartige Verschiebbarkeit ermöglicht ein gerichtetes Verschieben der beiden Bügelelemente relativ zueinander mit einer zielgerichteten und gleichmäßigen Kraftverteilung.

Erfindungsgemäß ist das Verschieben der beiden Bügelelemente mittels einer die beiden Bügelelemente verbindenden elastischen Spanneinrichtung gestaltet. Mittels einer solchen Spanneinrichtung können die beiden Bügelelemente ausgehend von einer Ausgangsposition relativ zueinander flexibel in Position gehalten werden. Nach einer Veränderung der derartigen Position können die beiden Bügelelemente wieder ihre Ausgangsposition einnehmen. In einem am Vieh gehaltenen Zustand des Vieh-Schlagbügels weist eine solche Ausgangsposition vorteilhafterweise eine elastische bzw. federnde Vorspannung auf. Mittels der derartigen Vorspannung ist der Vieh-Schlagbügel am Vieh klemmend gehalten bzw. aufgeklemmt und ist insbesondere die Flanke nach oben gehoben. Je nach Bewegung des Viehs kann sich die Position der beiden Bügelelemente relativ zueinander verändern und an das Vieh anpassen. Dabei wird die Position der beiden Bügelelemente immer wieder in ihre Ausgangsposition zurückgedrängt, womit der Vieh-Schlagbügel stabil am Vieh gehalten ist.

Erfindungsgemäß vorteilhaft ist die Spanneinrichtung mit einer Feder gestaltet. Eine solche Gestaltung ist fertigungstechnisch besonders einfach und kostengünstig sowie anwendungstechnisch besonders effektiv. Dabei ist die Feder platzsparend bevorzugt als eine Schraubenfeder gestaltet, die besonders bevorzugt eine Zugfeder ist. Mit der Zugfeder kann das Verschieben der beiden Bügelelemente zueinander besonders einfach und effektiv ermöglicht und begrenzt werden. Als Zugfeder ist die Schraubenfeder in Richtung ihrer Achse auseinandergezogen, womit zielgerichtet eine federnde Vorspannung der beiden Bügelelemente des Vieh-Schlagbügels ausgeübt werden kann.

Weiterhin ist die Feder bevorzugt an einem der beiden Bügelelemente ortsfest angeordnet und an dem anderen der beiden Bügelelemente ortsfest an mindestens zwei verschiedenen Stellen anzuordnen. Damit kann eine unterschiedliche Federkraft bzw. Spannkraft je nach Bedarf mit nur einer Feder realisiert werden.

Zudem weist die Spanneinrichtung erfindungsgemäß vorteilhaft eine derart bemessene Spannkraft auf, dass durch manuelles Bewegen der beiden Bügelelemente entgegen der Spannkraft eine Verschiebeposition der beiden Bügelelemente zu erreichen ist, mit der ein Anbringen des Vieh-Schlagbügels an dem Vieh ermöglicht ist. Es können die beiden Bügelelemente also von Hand so weit und so leicht voneinander weg verschoben werden, dass der Vieh-Schlagbügel in seiner Längserstreckung so geweitet wird, dass er zum Anbringen an dem Vieh bequem die Flanke und das Rückgrat des Viehs umgreifen kann. Dabei kann zugleich mittels des erfindungsgemäßen, freien Bewegens entgegen der Spannkraft eine zum Halten an dem Vieh benötigte Haltekraft bzw. Haltespannung erreicht werden und darüber hinaus eine zusätzliche Vorspannung zum Anbringen an dem Vieh. Nach dem Anbringen ist die zusätzliche Vorspannung wieder aufzulösen, womit der Vieh-Schlagbügel mit seiner benötigten Haltespannung stabil an dem Vieh gehalten werden kann.

In vorteilhafter Weise sind erfindungsgemäß ferner die beiden Bügelelemente in ihrer Verschiebeposition mittels einer Arretiereinrichtung relativ zueinander wahlweise zu arretieren und zu lösen. Je nach Bedarf können dann die beiden Bügelelemente in ihrer Verschiebeposition arretiert bzw. fixiert werden. Ein Anbringen an dem Vieh kann erleichtert werden, wenn die Verschiebeposition von so weit voneinander weg geschobenen Bügelelementen fixiert ist, dass ein bequemes Umgreifen der Flanke und des Rückgrats ermöglicht ist. Nach dem Anbringen des Vieh-Schlagbügels am Vieh kann die Arretiereinrichtung gelöst werden und der Vieh-Schlagbügel stellt sich aufgrund seiner federnden Vorspannung automatisch auf eine individuelle Viehgröße ein. Zudem kann der Vieh-Schlagbügel mit in ihrer Verschiebeposition arretierten Bügelelementen ohne störende Verschiebebewegungen gut transportiert werden.

Zudem ist erfindungsgemäß vorteilhaft das wahlweise Arretieren und Lösen der beiden Bügelelemente mittels der Arretiereinrichtung in mindestens zwei Stufen gestaltet. Derart gestaltet, kann zum Anbringen des Vieh-Schlagbügels an das Vieh eine dazu benötigte zu arretierende Verschiebeposition an die Größe des Viehs in mindestens zwei Stufen angepasst werden.

Alternativ ist das wahlweise Arretieren und Lösen der beiden Bügelelemente mittels der Arretiereinrichtung erfindungsgemäß vorteilhaft stufenlos gestaltet. Damit kann eine besonders variable Größenanpassung des Vieh-Schlagbügels in arretierter Verschiebeposition der beiden Bügelelemente zum Anbringen an das Vieh erreicht werden.

Erfindungsgemäß vorzugsweise umfasst die Arretiereinrichtung eine Arretierschraube. Die Arretierschraube hat einen Schraubenkopf und einen ein Gewinde aufweisenden Schraubenschaft und ist dazu angepasst, dass nach einem Eindrehen des Schraubenschafts die beiden Bügelelemente mit dem Schraubenkopf ortsfest aneinander gehalten sind. Dazu ist bevorzugt an einem Bügelelement eine Durchgangsöffnung, insbesondere in Form eines Loches, Langlochs oder eines Schlitzes, vorgesehen, deren Öffnungsquerschnitt geringer ist als der Schraubenkopf in seinem Durchmesser. An dem anderen Bügelelement ist ein Gegengewinde für das Gewinde des Schraubenschafts vorgesehen. Derart gestaltet, kann der Schraubenschaft durch die Durchgangsöffnung des einen Bügelelements geführt und in das Gegengewinde des anderen Bügelelements gedreht werden, bis der Schraubenkopf an dem einen Bügelelement anliegt. Derart anliegend, zieht die Arretierschraube beide Bügelelemente aneinander.

Damit ist eine besonders einfach herstellbare und von einem Benutzer manuell bedienbare Arretiereinrichtung geschaffen, mit der beide Bügelelemente zuverlässig in ihrer Verschiebeposition arretiert werden können.

Bevorzugt ist mittels der Arretierschraube und mittels eines Langlochs oder eines Schlitzes als Durchgangsöffnung eine stufenlos verstellbare Arretiereinrichtung geschaffen.

Ferner umfasst die Arretiereinrichtung erfindungsgemäß vorteilhaft einen Arretierfederstift. Der Arretierfederstift ist ein Stift, der federnd vorgespannt ist und bevorzugt an einem Bügelelement in vorgespannter Position angeordnet ist. An dem anderen Bügelelement ist mindestens ein Loch vorgesehen, in das der Arretierfederstift bei einem Verschieben des einen Bügelelements bei Erreichen des Loches einrasten kann. Eine solche Rastverbindung kann besonders schnell hergestellt werden. Zu einem einfachen und schnellen Lösen der Rastverbindung ist der Arretierfederstift bevorzugt mit einem Federriegel gestaltet, mittels dem der Arretierfederstift wieder aus dem Loch des einen Bügelelements gezogen werden kann.

Vorzugsweise ist mittels des Arretierfederstifts und mittels mindestens eines Loches eine Arretiereinrichtung geschaffen, die in mindestens einer Stufe verstellbar ist.

Der Federriegel ist dazu bevorzugt ein Drehriegel mit einem mit dem Arretierfederstift bzw. Federstift verbundenen Drehgriff. Der Drehgriff ist derart gestaltet, dass der Drehgriff entlang an einer schiefen Ebene und abgestützt an derselben gedreht werden kann. Die schiefe Ebene befindet sich dabei am Ende eines den Federstift umschließenden hohlzylinderförmigen Riegelgehäuses, das an dem einen Bügelelement ortsfest angeordnet ist. Mittels eines solchen Drehens kann der Federstift aus dem Loch des anderen Bügelelements einfach und ohne großen Kraftaufwand herausgezogen werden.

Besonders bevorzugt ist der Federriegel ein Kippriegel mit einem mit dem Federstift verbundenen Kipphebel. Der Kipphebel ist ferner schwenkbar an einem Ende eines den Federstift umschließenden hohlzylinderförmigen Riegelgehäuses angeordnet, das sich ortsfest an dem einen Bügelelement befindet. Bei einer in Richtung des einen Bügelelements drückenden Hebelbewegung ist der Kipphebel an dem Riegelgehäuse abgestützt, womit der Federstift besonders schnell aus dem Loch des anderen Bügelelements gezogen werden kann.

Des Weiteren sind in erfindungsgemäß vorteilhafter Weise die beiden Bügelelemente rohrförmig gestaltet, insbesondere ist das eine Bügelelement mit einem Innenrohr und das andere Bügelelement mit einem das Innenrohr umgreifenden Außenrohr gestaltet. Mit der derartigen Gestaltung ist ein sehr kompakter Vieh-Schlagbügel geschaffen. Zudem weist der derart kompakte Vieh-Schlagbügel mit den beiden mit einem Innenrohr und Außenrohr gestalteten Bügelelementen, die relativ zueinander verschiebbar sind, bewegliche Bauteile auf, die sehr stabil ineinander geführt sind. Eine ansonsten bei beweglichen Bauteilen bestehende Verschleißgefahr kann damit vermieden werden.

Dabei weist das Innenrohr bevorzugt einen Knick mit einem Winkel von etwa 140° bis 160° auf. Damit ist der Vieh-Schlagbügel an die Form des Viehs angepasst gestaltet. Ferner ist das Innenrohr an einem Ende mit einem bogenförmigen Endteil insbesondere zum Umgreifen des Rückgrats gestaltet. An seinem anderen Ende hat das Innenrohr nach dem Knick einen geraden Innenrohrabschnitt.

Ferner weist das Außenrohr einen geraden Außenrohrabschnitt auf, mit dem der gerade Innenrohrabschnitt umgriffen ist. Zudem hat der Außenrohrabschnitt an seinem dem Knick des Innenrohrs gegenüberliegenden Ende ein bogenförmiges Endteil insbesondere zum Umgreifen der Flanke.

Bevorzugt ist im Inneren des geraden Innenrohrabschnitts als Spanneinrichtung eine Schraubenfeder vorgesehen, die innen an dem Innenrohr und gegenüberliegend innen an dem Außenrohr ortsfest gehalten ist. Damit sind das Innenrohr und das Außenrohr stabil und kompakt federnd miteinander verbunden.

Ferner sind die beiden Bügelelemente erfindungsgemäß vorteilhaft mit einem Vierkantrohr, einem Rundrohr oder mit einer Kombination aus einem Vierkantrohr und einem Rundrohr rohrförmig gestaltet. Insbesondere kann mittels einer Gestaltung als Vierkantrohr ein unerwünschtes Verdrehen des das Innenrohr umgreifenden Außenrohrs verhindert werden.

### Kurzbeschreibunq der Zeichnungen

Nachfolgend wird ein Ausführungsbeispiel einer erfindungsgemäßen Lösung anhand der beigefügten schematischen Zeichnungen näher erläutert. Es zeigt:
- Fig. 1: eine Schrägansicht eines Ausführungsbeispiels des erfindungsgemäßen Vieh-Schlagbügels,
- Fig. 2: eine teilweise aufgeschnittene Draufsicht des Ausführungsbeispiels gem. Fig. 1 in Schwimmstellung,
- Fig. 3: die Ansicht gem. Fig. 2 in einem vorgespannten Zustand und
- Fig. 4: eine Schrägansicht des Ausführungsbeispiels gem. Fig. 1 in einem an einem Vieh gehaltenen Zustand.

### Detaillierte Beschreibung des Ausführungsbeispiels

In den Fig. ist ein Vieh-Schlagbügel 10 dargestellt, wie er zum Ruhigstellen und zum Verhindern oder Erschweren eines Ausschlagens von einer Kuh 12 als Vieh verwendet wird. Andere nicht dargestellte Ausführungsbeispiele sind zum selben Zweck insbesondere für eine Ziege, ein Schaf oder ein Pferd als Vieh geeignet.

Der Vieh-Schlagbügel 10 ist im Wesentlichen aus entsprechend stabilen metallischen Bauteilen gebildet.

Dazu weist der Vieh-Schlagbügel 10 ein erstes Bügelelement 14 auf, das rohrförmig mit einem Innenrohr 16 gestaltet ist. Das Innenrohr 16 ist ein Vierkantrohr. Zudem hat das Innenrohr 16 an seinem einen Ende einen geraden Innenrohrabschnitt 18, der von einem zweiten Bügelelement 20 umgriffen ist.

In Richtung seines anderen Endes weist das Innenrohr 16 nach dem geraden Innenrohrabschnitt 18 einen Knick 21 auf, mittels dem ein nachfolgender gerader Innenrohrabschnitt 22 einen Winkel von etwa 145° mit dem geraden Innenrohrabschnitt 18 einschließt. Im Anschluss an den geraden Innenrohrabschnitt 22 weist das erste Bügelelement 14 ein bogenförmiges Endteil 24 auf, das zum Umgreifen eines Rückgrats 26 der Kuh 12 dient. Für ein angenehmes Tragegefühl ist an dem Endteil 24 ein Gummipuffer 28 vorgesehen.

Ferner ist das zweite Bügelelement 20 verdrehsicher in Bezug auf den vierkantförmigen geraden Innenrohrabschnitt 18 mit einem als Vierkantrohr gestalteten geraden Außenrohr 30 gestaltet. An dem geraden Außenrohr 30 befindet sich ein bogenförmiges Endteil 32 mit einem daran angeordneten Gummipuffer 34 des zweiten Bügelelements 20, das zum Umgreifen einer Flanke 36 der Kuh 12 dient.

Das Außenrohr 30 des zweiten Bügelelements 20 und der gerade Innenrohrabschnitt 18 des ersten Bügelelements 14 sind relativ zueinander verschiebbar, womit die beiden Bügelelemente 14 und 20 relativ zueinander verschiebbar sind.

Zudem ist eine Spanneinrichtung 38 vorgesehen, die elastisch gestaltet ist. Die Spanneinrichtung 38 ist mittels einer Halteschraube 40 im Inneren des Innenrohrs 16 am ersten Bügelelement 14 befestigt. Dazu ist die Halteschraube 40 durch eine nicht weiter dargestellte Bohrung des Innenrohrs 16 geführt. Dementsprechend ist am Außenrohr 30 eine nicht dargestellte Bohrung vorgesehen, durch die eine Halteschraube 42 geführt ist, mit der die elastische Spanneinrichtung 38 an dem zweiten Bügelelement 20 befestigt ist. Die elastische Spanneinrichtung 38 ist mit einer Schraubenfeder 44 gestaltet, die als Spannfeder bzw. Zugfeder wirkt und sich mit ihrer Längsachse entlang des geraden Innenrohrabschnitts 18 und damit entlang des Außenrohrs 30 erstreckt.

Damit sind beide Bügelelemente 14 und 20 stets federnd miteinander verbunden und sind zugleich relativ zueinander und voneinander weg verschiebbar. Ein Verschieben kann aktiv mittels eines Benutzers erfolgen oder mittels einer Bewegung der Kuh 12, wenn der Vieh-Schlagbügel 10 an der Kuh 12 gehalten ist.

In einem alternativen, nicht dargestellten Ausführungsbeispiel ist die elastische Spanneinrichtung 38 mit einem Gasdruckzylinder gestaltet. Ein solcher Gasdruckzylinder kann an seiner Längserstreckung von einem Benutzer auseinandergezogen werden und zieht sich nach einem Loslassen langsam wieder zusammen. Damit erfüllt der Gasdruckzylinder die erforderlichen Funktionen der elastischen Spanneinrichtung 38 und ist zudem in seinem Bewegungsablauf sehr gleichmäßig, was zusätzlich beruhigend auf die Kuh 12 wirkt. In einem bevorzugten Ausführungsbeispiel ersetzt der Gasdruckzylinder bauteilsparend und kompakterweise den Innenrohrabschnitt 18 und das Außenrohr 30.

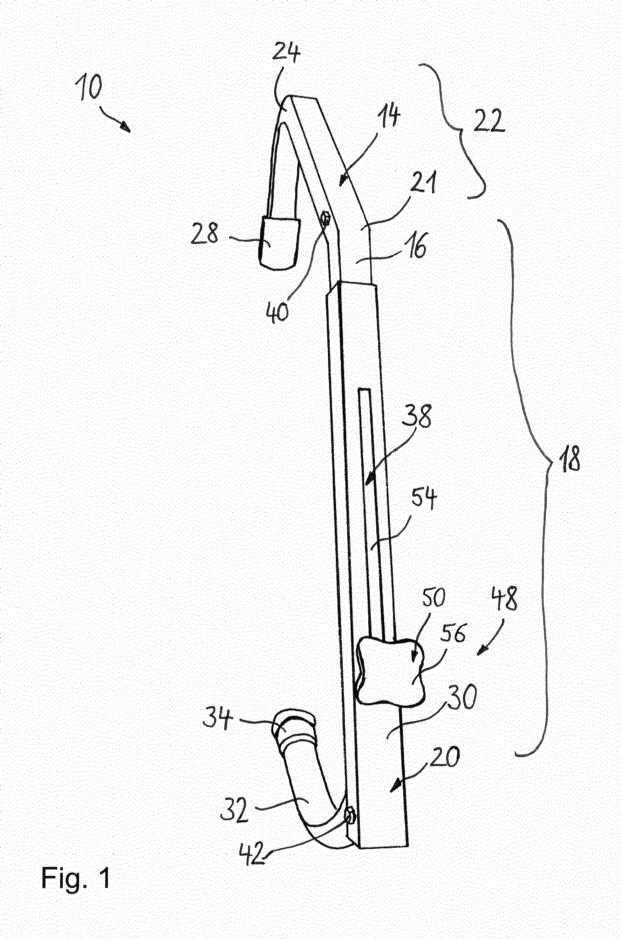

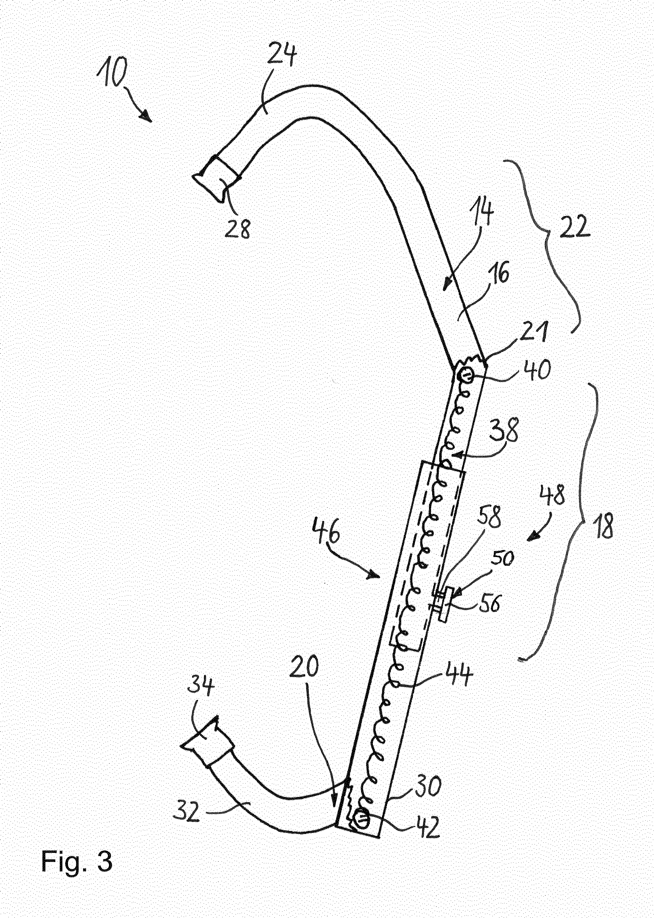

Zum wahlweisen Feststellen bzw. Arretieren und Lösen der beiden Bügelelemente 14 und 20 in einer Verschiebeposition 46 ist eine Arretiereinrichtung 48 vorgesehen. Die Arretiereinrichtung 48 umfasst eine Arretierschraube 50 und ein nicht näher dargestelltes Innengewinde am Innenrohrabschnitt 18. In das Innengewinde ist die Arretierschraube 50 mit ihrem nicht weiter dargestellten Außengewinde an ihrem Schraubenschaft 52 als Gegengewinde eingedreht und dort ortsfest und verliersicher gehalten. Zudem ist der Schraubenschaft 52 durch einen Schlitz 54 in dem den Innenrohrabschnitt 18 umgreifenden Außenrohr 30 geführt. Außen an dem Außenrohr 30 befindet sich die Arretierschraube 50 mit ihrem Schraubenkopf 56. Der Schraubenkopf 56 dient als Feststellgriff und ist dazu außenumfänglich mit Ausbuchtungen versehen, an denen der Schraubenkopf 56 gut gegriffen und verrutschsicher gedreht werden kann. Mittels eines weiteren Hineindrehens der Arretierschraube 50 in das Innengewinde des Innenrohrabschnitts 18 wird das Innenrohr 16 an das Außenrohr 30 gezogen, bis die Arretierschraube 50 mit ihrem Schraubenkopf 56 am Außenrohr 30 anliegt. Dazu ist zur leichteren Handhabe als Abstands- und Auflageelement zwischen dem Schraubenkopf 56 und dem Außenrohr 30 eine Mutter 58 vorgesehen. Mit einer damit erzeugten Zugkraft sind das Innenrohr 16 und das Außenrohr 30 aneinander gepresst und bilden eine ortsfeste kraft- und formschlüssige Verbindung der beiden Bügelelemente 14 und 20 in ihrer Verschiebeposition 46 (Fig. 3). Dabei kann eine derart fixierte bzw. arretierte Verschiebeposition 46 entlang des Schlitzes 54 stufenlos variiert werden (Fig. 1).

In einem weiteren, nicht dargestellten Ausführungsbeispiel ist die Arretiereinrichtung 48 mit einem Arretierfederstift bzw. Federstift gestaltet, der ortsfest und federnd vorgespannt am Außenrohr 30 angebracht ist. Als Eingreifelement für den Federstift ist am Innenrohrabschnitt 18 mindestens ein Loch vorgesehen. Bei einem Verschieben des Außenrohrs 30 am Innenrohrabschnitt 18 greift der Federstift automatisch in das Loch ein, sobald dieses Loch während des Verschiebens erreicht ist. Die Verschiebeposition 46 ist besonders schnell fixiert. Mittels eines mit dem Federstift verbundenen Drehgriffs oder Kipphebels kann der Federstift zum Lösen der fixierten Verschiebeposition 46 von einem Benutzer wieder aus dem Loch gezogen werden.

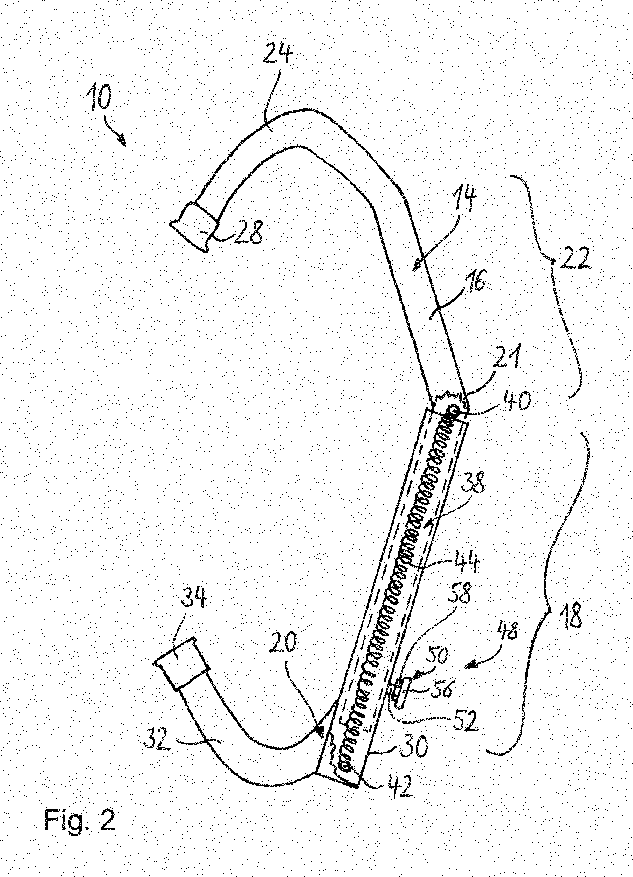

Fig. 2 und Fig. 3 zeigen einen Vieh-Schlagbügel 10, der im Bereich des geraden Innenrohrabschnitts 18 und des Außenrohrs 30 teilweise aufgeschnitten dargestellt ist. Dabei ist der Innenrohrabschnitt 18 mit gestrichenen Linien eingezeichnet, der jeweils vom Außenrohr 30 umgriffen ist.

Fig. 2 zeigt eine Schwimmstellung des Vieh-Schlagbügels 10, in der beide Bügelelemente 14 und 20 in ihrer Verschiebeposition nicht fixiert, sondern frei relativ zueinander verschiebbar sind.

Fig. 3 zeigt einen Vieh-Schlagbügel 10 in einer mittels eingedrehter Arretierschraube 50 fixierten Verschiebeposition 46, bei der beide Bügelelemente 14 und 20 auseinandergezogen und damit voneinander weg verschoben sind. Dadurch ist die Schraubenfeder 44 auseinandergezogen und vorgespannt.

Zum Anbringen des Vieh-Schlagbügels 10 an die Kuh 12 werden die Bügelelemente 14 und 20 von einem Benutzer so weit auseinandergezogen, dass der Vieh-Schlagbügel 10 bequem von der Flanke 36 bis über das Rückgrat 26 der Kuh 12 gelegt werden kann. Bei einem Erreichen einer dazu passenden Verschiebeposition 46 werden die Bügelelemente 14 und 20 vom Benutzer mittels Eindrehen der Arretierschraube 50 aneinander ortsfest fixiert. Derart fixiert und mittels der auseinandergezogenen Schraubenfeder 44 vorgespannt, wird der Vieh-Schlagbügel 10 die Flanke 36 der Kuh 12 von unten umgreifend über das Rückgrat 26 gelegt. Danach wird die fixierte Verschiebeposition 46 vom Benutzer gelöst. Nach dem derartigen Lösen werden die beiden Bügelelemente 14 und 20 mittels einer Rückstellkraft der Schraubenfeder 44 wieder aneinandergezogen, bis die Kuh 12 mit ihrem Körper ein solches Aneinanderziehen beschränkt. Dabei bleibt eine ausreichend große federnde Vorspannung in einem an der Kuh 12 angebrachten Zustand des Vieh-Schlagbügels 10 bestehen, die den Vieh-Schlagbügel 10 zuverlässig an der Kuh 12 hält. Dazu ist die Schraubenfeder 44 in ihrer Federkraft, ihrem Ausmaß und ihrer Länge in Verbindung mit den beiden Bügelelementen 14 und 20 entsprechend angepasst.

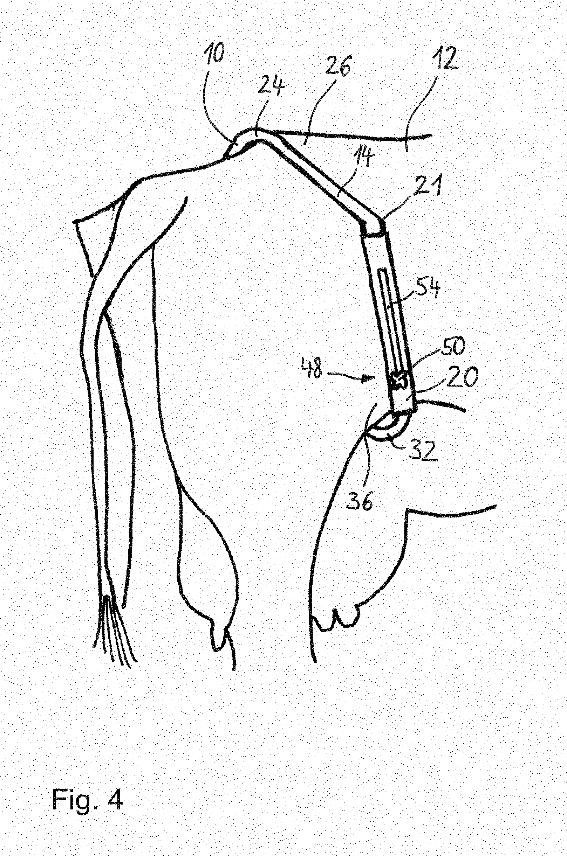

Fig. 4 zeigt einen an der Kuh 12 angebrachten und gehaltenen Zustand des Vieh-Schlagbügels 10. Dabei sind die beiden Bügelelemente 14 und 20 mittels ihrer elastischen Spanneinrichtung 38 relativ zueinander und voneinander weg verschiebbar. Je nach Bewegung der Kuh 12 werden die Bügelelemente 14 und 20 sozusagen von der Kuh 12 selbst bzw. von deren Bewegung auseinandergezogen. Damit werden vom Vieh-Schlagbügel 10 keine unerwünscht großen Druckkräfte und Zugkräfte auf die Kuh 12 ausgeübt, was stark beruhigend auf die Kuh 12 wirkt. Bei einer anderen Bewegung verändert sich die Kuh 12 in ihrer Position. Dabei kann es sein, dass der Vieh-Schlagbügel 10 in seiner Längserstreckung kürzer sein muss, um stabil an der Kuh 12 gehalten zu sein. Mittels der Schraubenfeder 44 werden dazu die beiden Bügelelemente 14 und 20 wieder aneinandergezogen, sodass der Vieh-Schlagbügel 10 bei jeder Bewegung der Kuh 12 immer stabil an der Kuh 12 gehalten ist. Mittels eines solchen in gewisser Weise automatischen bzw. sich selbsttätig verschiebbaren Gestaltens der beiden Bügelelemente 14 und 20 relativ zueinander, passt sich der Vieh-Schlagbügel 10 automatisch an die Bewegungen der Kuh 12 an. Damit kann der Vieh-Schlagbügel 10 immer seine beruhigende Wirkung entfalten, ohne zu stark einschränkend für die Kuh 12 zu sein.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Vieh-Schlagbügel
- 12: Vieh
- 14: Bügelelement
- 16: Innenrohr
- 18: gerader Innenrohrabschnitt
- 20: Bügelelement
- 21: Knick
- 22: gerader Innenrohrabschnitt
- 24: bogenförmiges Endteil
- 26: Rückgrat
- 28: Gummipuffer
- 30: Außenrohr
- 32: bogenförmiges Endteil
- 34: Gummipuffer
- 36: Flanke
- 38: Spanneinrichtung
- 40: Halteschraube
- 42: Halteschraube
- 44: Schraubenfeder
- 46: Verschiebeposition
- 48: Arretiereinrichtung
- 50: Arretierschraube
- 52: Schraubenschaft
- 54: Schlitz
- 56: Schraubenkopf
- 58: Mutter

## Patentansprüche

1. Vieh-Schlagbügel (10) zum Verhindern eines Ausschlagens von einem Vieh (12), mit zwei Bügelelementen (14, 20), die relativ zueinander versetzbar sind und dazu angepasst sind, den Vieh-Schlagbügel (10) an dem Vieh (12) zwischen einer Flanke (36) sowie einem Rückgrat (26) des Viehs (12) zu halten,
**dadurch gekennzeichnet, dass**, wenn der Vieh-Schlagbügel (10) an dem Vieh (12) gehalten ist, die beiden Bügelelemente (14, 20) sich aufgrund einer Bewegung des Viehs (12) relativ zu einander verschiebbar gestaltet sind, und das Verschieben der beiden Bügelelemente (14, 20) mittels einer die beiden Bügelelemente (14, 20) verbindenden elastischen Spanneinrichtung (38) gestaltet ist.

2. Vieh-Schlagbügel nach Anspruch 1,
**dadurch gekennzeichnet, dass** die Spanneinrichtung (38) mit einer Schraubenfeder (44) gestaltet ist.

3. Vieh-Schlagbügel nach Anspruch 1 oder 2,
**dadurch gekennzeichnet, dass** die Spanneinrichtung (38) eine derart bemessene Spannkraft aufweist, dass durch manuelles Bewegen der beiden Bügelelemente (14, 20) entgegen der Spannkraft eine Verschiebeposition (46) der beiden Bügelelemente (14, 20) zu erreichen ist, mit der ein Anbringen des Vieh-Schlagbügels (10) an dem Vieh (12) ermöglicht ist.

4. Vieh-Schlagbügel nach einem der Ansprüche 1 bis 3,
**dadurch gekennzeichnet, dass** die beiden Bügelelemente (14, 20) mittels einer Arretiereinrichtung (48) relativ zueinander wahlweise zu arretieren sind.

5. Vieh-Schlagbügel nach Anspruch 4,
**dadurch gekennzeichnet, dass** die Arretiereinrichtung (48) mindestens zwei Stufen aufweist.

6. Vieh-Schlagbügel nach Anspruch 4,
**dadurch gekennzeichnet, dass** die Arretiereinrichtung (48) stufenlos gestaltet ist.

7. Vieh-Schlagbügel nach einem der Ansprüche 4 bis 6,
**dadurch gekennzeichnet, dass** die Arretiereinrichtung (48) eine Arretierschraube (50) umfasst.

8. Vieh-Schlagbügel nach einem der Ansprüche 4 bis 7,
**dadurch gekennzeichnet, dass** die Arretiereinrichtung (48) einen Arretierfederstift umfasst.

9. Vieh-Schlagbügel nach einem der Ansprüche 1 bis 8,
**dadurch gekennzeichnet, dass** die beiden Bügelelemente (14, 20) rohrförmig gestaltet sind, insbesondere das eine Bügelelement (14) mit einem Innenrohr (16) und das andere Bügelelement (20) mit einem das Innenrohr (16) umgreifenden Außenrohr (30) gestaltet ist.

## Claims

1. Cattle shackle (10) to prevent a cattle (12) from kicking, with two bracket elements (14, 20) which are movable relatively to each other and are adapted to hold the cattle shackle (10) at the cattle (12) between a flank (36) and a spinal column (26) of the cattle (12),
**characterized in that**, when the cattle shackle (10) is hold at the cattle (12) the two bracket elements (14, 20) are created shiftable relatively to each other due to a move of the cattle (12), and the shift of the two bracket elements (14, 20) is created by means of an elastic tensioning device (38) that connects the two bracket elements (14, 20).

2. Cattle shackle according to claim 1,
**characterized in that** the tensioning device (38) is created with a helical spring (44).

3. Cattle shackle according to claim 1 or 2,
**characterized in that** the tensioning device (38) has a tension force dimensioned in the way that through a manual movement of the two bracket elements (14, 20) contrarily to the tension force a shift position (46) of the two bracket elements (14, 20) is achieved with which an attachment of the cattle shackle (10) at the cattle (12) is made possible.

4. Cattle shackle according to one of the claims 1 to 3,
**characterized in that** the two bracket elements (14, 20) are to be locked relatively to each other as desired by means of a locking device (48).

5. Cattle shackle according to claim 4,
**characterized in that** the locking device (48) contains at least two levels.

6. Cattle shackle according to claim 4,
**characterized in that** the locking device (48) is created continuously variable.

7. Cattle shackle according to one of the claims 4 to 6,
**characterized in that** the locking device (48) contains a lockable screw (50).

8. Cattle shackle according to one of the claims 4 to 7,
**characterized in that** the locking device (48) contains a locking spring pin.

9. Cattle shackle according to one of the claims 1 to 8,
**characterized in that** the two bracket elements (14, 20) are created tubular, in particular that the one bracket element (14) is created with an internal tube (16), the other bracket element (20) with an external tube (30) embracing the internal tube (16).

## Revendications

1. Entrave (10) pour empêcher qu'un bétail (12) rue, avec deux éléments d'arceau (14, 20) qui sont déplaçables l'un opposé a l'autre et qui sont adaptés pour fixer l'entrave (10) au bétail (12) entre un flanc (36) et une colonne vertébrale (26) du bétail (12),
caractérisé en ce qe, si l'entrave (10) est attaché au bétail (12), les deux éléments d'arceau (14, 20) sont conçus à cause d'un mouvement du bétail (12) déplaçables l'un opposé à l'autre, et le déplacement des deux éléments d'arceau (14, 20) est conçu en moyen d'un dispositif de tendeur (38) élastique raccordant les deux éléments d'arceau (14, 20).

2. Entrave selon la revendication 1,
caractérisé en ce qe le dispositif de tendeur (38) est conçu avec un ressort hélicoïdal (44).

3. Entrave selon la revendication 1 ou 2,
**caractérisé en ce que** le dispositif de tendeur (38) a une force de tension dimensionnée de telle manière qu'en déplaçant manuellement les deux éléments d'arceau (14, 20) contre la force de tension, une position de déplacement (46) des deux éléments d'arceau (14, 20) peut être atteinte, avec laquelle l'entrave (10) peut être attaché au bétail (12).

4. Entrave selon une des revendications 1 à 3,
**caractérisé en ce que** les deux éléments d'arceau (14, 20) peuvent être optionnellement bloqués l'un opposé à l'autre par un dispositif de blocage (48).

5. Entrave selon la revendication 4,
**caractérisé en ce que** le dispositif de blocage (48) présente au moins deux niveaux.

6. Entrave selon la revendication 4,
**caractérisé en ce que** le dispositif de blocage (48) est conçu variable en continu.

7. Entrave selon une des revendications 4 à 6,
**caractérisé en ce que** le dispositif de blocage (48) présente une vis de blocage (50).

8. Entrave selon une des revendications 4 à 7,
**caractérisé en ce que** le dispositif de blocage (48) présente une goupille élastique de blocage.

9. Entrave selon une des revendications 1 à 8,
**caractérisé en ce que** les deux éléments d'arceau (14, 20) sont conçus tubulaires, en particulier un élément d'arceau (14) est conçu avec un tube intérieur (16) et l'autre élément d'arceau (20) est conçu avec un tube extérieur (30) englobant le tube intérieur (16).
